# EUROPEAN PATENT APPLICATION

(11) **EP 4 796 380 A1**
(43) Date of publication of application: **26.08.2026**
(21) Application number: 26158579.8
(22) Date of filing: 13.02.2026
(51) Int. Cl.: B60N 2/66, B60N 2/90

(54) **LUMBAR SUPPORT ASSEMBLY**

(30) Priority: 25.02.2025 KR 20250024084
(71) Applicant: Daechang Seat Co., Ltd.-Dongtan, Hwaseong-si, Gyeonggi-do 18487 (KR)
(72) Inventor: CHO, Chan Ki, 25305 Pyeongchang-gun (KR); PARK, Gun Young, 17041 Yongin-si (KR); HWANG, Bum Jin, 07584 Seoul (KR); KIM, Jin Oh, 18466 Hwaseong-si (KR); CHOI, Su Min, 28125 Cheongju-si (KR)
(74) Representative: Caspary, Karsten

(57) **Abstract**

Proposed is a lumbar support assembly that has a lumbar support function and a massage function. The lumbar support assembly is a compact lumbar support assembly with reduced manufacturing cost by reducing the number of components. The lumbar support assembly includes a suspension provided inside a vehicle seat, a bladder module having an upper bladder portion and a lower bladder portion provided on a front side of the suspension, a pump providing air to the bladder module, and a controller configured to control the bladder module.

## Description

### BACKGROUND OF THE DISCLOSURE

### Field of the Disclosure

The present disclosure relates to a lumbar support assembly. More specifically, the present disclosure relates to a lumbar support assembly that provides both lumbar support and massage functions.

### Description of the Related Art

Generally, the back of the seat is provided with a lumbar support assembly that supports the lumbar spine of the occupant.

Korean Patent No. 10-1701141 discloses an air lumbar support assembly.

The air lumbar support assembly disclosed in this publication includes: a suspension mat installed on a seatback frame, the suspension mat having a corrugated plate shape in the width direction, with a waist support portion formed flat; a plurality of air bladders laminated and coupled in a stepped manner on a flat portion of one side of the suspension mat so that portions thereof are overlapped; and an air supply coupled to a flat portion on the other side of the suspension mat and configured to supply air such that at least one of the plurality of air bladders protrudes toward a back region of the occupant.

The air lumbar support assembly described above does not include a configuration having a massage function, such that a separate massage module has to be installed in the seatback frame to implement the massage function. If the separate massage module is provided, the massage module may be located at the front or rear of the air bladder, which increases the bulk of the vehicle seat. Also, if the massage module is located in front of the air bladder, the lumbar support function is not immediately delivered to the passenger, and if the massage module is located in the rear of the air bladder, the massage function is not immediately delivered to the passenger.

### Related Art Document

### Patent Document

Patent Document 1: KR 10-1701141 (Registered on January 24, 2017)

### SUMMARY OF THE DISCLOSURE

Accordingly, the present disclosure has been made keeping in mind the above problems occurring in the related art, and an objective of the present disclosure is to provide a lumbar support assembly that has a lumbar support function and a massage function. Another objective of the present disclosure is to provide a compact lumbar support assembly with reduced manufacturing cost by reducing the number of components.

In order to achieve the above objectives, according to one aspect of the present disclosure, there is provided a lumbar support assembly including: a suspension provided inside a vehicle seat; a bladder module having an upper bladder portion and a lower bladder portion provided on a front side of the suspension; a pump providing air to the bladder module; and a controller configured to control the bladder module.

In an exemplary embodiment, the upper bladder portion may include a plurality of back bladders arranged on a vehicle seat in the height direction.

In an exemplary embodiment, the lower bladder portion may be positioned lower than the upper bladder portion and include a plurality of lumbar bladders arranged on the vehicle seat in the height direction.

In an exemplary embodiment, each of the back bladders may include a first back bladder positioned on one side of the vehicle seat in the width direction, and a second back bladder positioned on the other side of the vehicle seat in the width direction.

In an exemplary embodiment, each of the lumbar bladders may have a body portion on the widthwise medial side of the vehicle seat and both ends on both widthwise lateral sides of the vehicle seat.

In an exemplary embodiment, the back bladders and the lumbar bladders may be provided on the same plane.

In an exemplary embodiment, the pump may include a first tube supplying air to each of the back bladders, and a second tube supplying air to each of the lumber bladders.

Unlike the conventional lumbar support assembly in which a massage module having a massage function and a lumbar module having a lumbar support function are separately provided and stacked so that the lumbar support function or the massage function is not immediately transmitted to the occupant, the lumber support assembly according to the embodiments has the effect that the lumbar support function or the massage function is immediately transmitted to the occupant because the back bladders having the massage function and the lumbar bladders having the massage function are provided on the same plane.

Furthermore, the lumbar support assembly according to the embodiments has the effect that the lumbar bladder implements both the massage function and the lumbar support function, and the lumbar bladders and the back bladders are provided on the same plane, thereby reducing the total number of parts and reducing the overall size of the lumbar support assembly.

Furthermore, the lumber support assembly according to the embodiments has the effect that the first back bladder, the second back bladder, and the lumber bladders are controlled independently, thereby correcting and supporting the posture of the occupant.

### BRIEF DESCRIPTION OF THE DRAWINGS

The above and other objectives, features and advantages of the present disclosure will be more clearly understood from the following detailed description when taken in conjunction with the accompanying drawings, in which:
FIG. 1 is a perspective view of a lumber support assembly according to an embodiment;
FIG. 2 is an exploded view of the lumber support assembly according to the embodiment; and
FIGS. 3 to 6 illustrate an example use of the lumber support assembly according to the embodiment

### DETAILED DESCRIPTION OF THE INVENTION

The advantages and features of the present disclosure and methods of achieving them will be apparent through the following embodiments described in detail with reference to the accompanying drawings. However, the disclosure is not limited to the embodiments disclosed herein, but may be embodied in many different forms. The embodiments are provided merely to make the disclosure complete and to fully apprise one of ordinary skill in the art to which the disclosure belongs of the scope of the disclosure, which is defined by the claims. Throughout the specification, like reference numerals refer to like components.

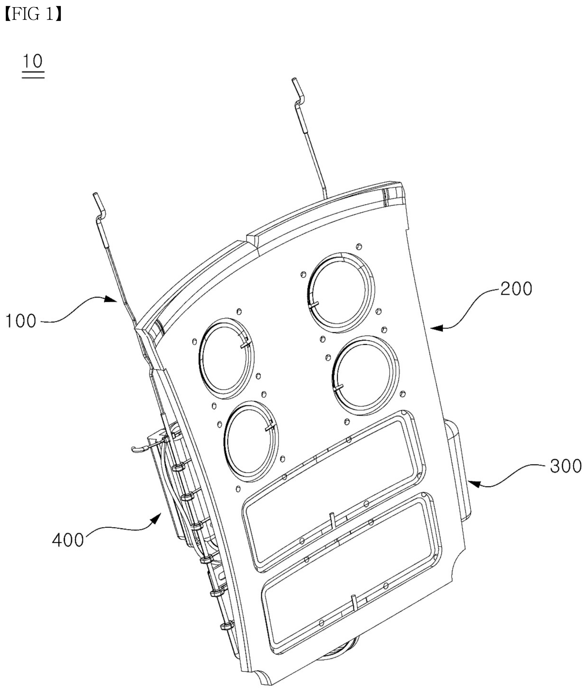

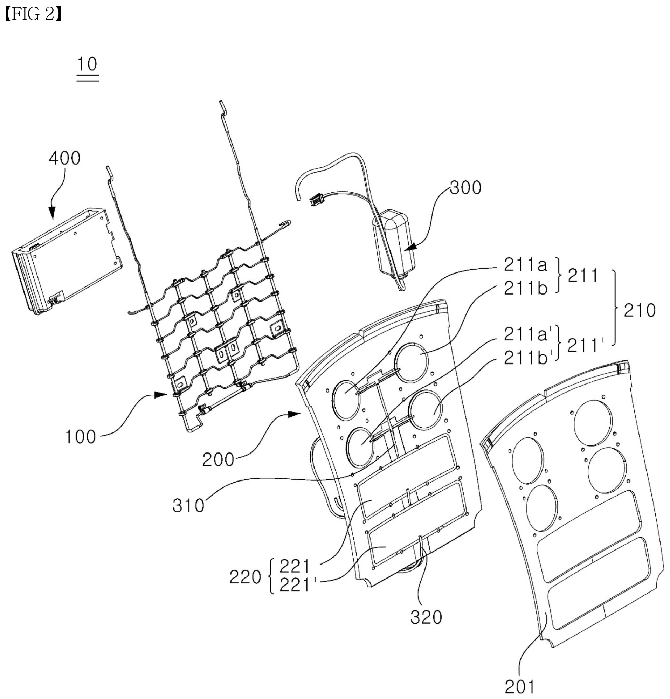

Referring to FIG. 1, which is a perspective view of a lumbar support assembly 10 according to an embodiment, and FIG. 2, which is an exploded view of the lumbar support assembly 10, the lumbar support assembly 10 is installed inside a vehicle seat and includes a suspension 100, a bladder module 200, a pump 300, and a controller 400.

The suspension 100 is mounted inside the vehicle seat and functions to support the back of the occupant. The suspension 100 may be formed in the shape of a frame and may be made of resilient metal and/or synthetic resin.

The bladder module 200 includes an upper bladder portion 210 and a lower bladder portion 220, and is provided at and supported by the front side of the suspension 100.

The upper bladder portion 210 may include a plurality of back bladders 211 arranged on the vehicle seat in the height direction. The back bladders 211 are inflated when air is injected.

Each of the back bladders 211 may include a first back bladder 211a positioned on one side of the vehicle seat in the width direction and a second back bladder 211b positioned on the other side of the vehicle seat in the width direction. That is, the back bladders 211 have a pair of air bladders arranged on the vehicle seat in the height direction.

The lower bladder portion 220 may be positioned lower than the upper bladder portion 210, and include a plurality of lumber bladders 221 arranged on the vehicle seat in the height direction. The lumber bladders 221 are inflated when air is injected.

Each of the lumber bladders 221 has a body portion on the widthwise medial side of the vehicle seat and both ends on both widthwise lateral sides of the vehicle seat. In other words, each of the lumber bladders 221 is shaped as a bladder having a length that is longer than its width, with each of the lumber bladders 221 arranged in the height direction of the vehicle seat.

Further, the lumber bladders 221 are disposed in the same plane as the back bladders 211.

The pump 300 provides air to the bladder module 200, and includes a first tube 310 and a second tube 320.

The first tube 310 supplies air to each of the back bladders 211.

The second tube 320 supplies air to each of the lumber bladders 221.

The controller 400 controls the bladder module 200. Specifically, the controller 400 may independently control the first back bladder 211a, the second back bladder 211b, and the lumber bladder 221.

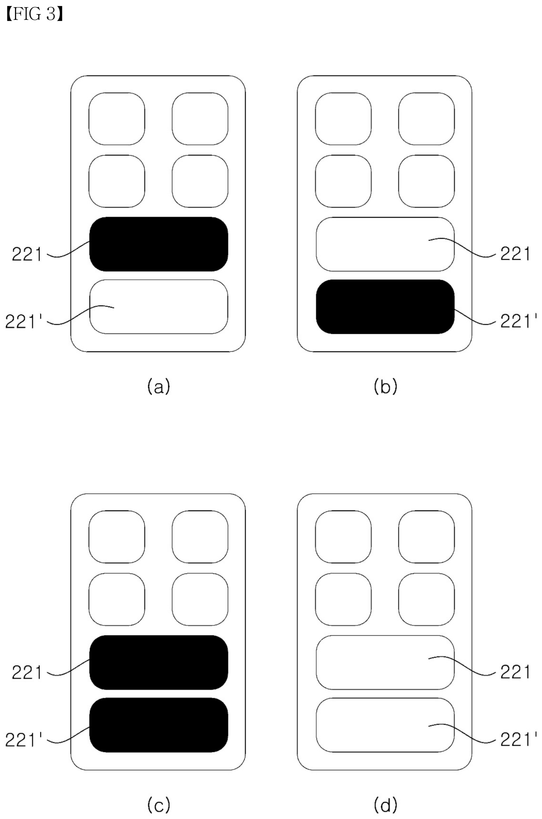

An example use of the lumber support assembly 10 will be described with reference to FIGS. 3A to 6B, which illustrate an example use of the lumber support assembly 10.

FIG. 3 illustrates a lumber support function of the lumber support assembly 10. Specifically, the controller 400 may control the lumber bladders 221, 221' to implement various functions.

Section (a) of FIG. 3 illustrates a function of the lumber support called 'Upper function' by inflating the lumber bladder 221 and deflating the lumber bladder 221'.

Section (b) of FIG. 3 illustrates a function of the lumber support called 'Lower function' by deflating the lumber bladder 221 and inflating the lumber bladder 221'.

Section (c) of FIG. 3 illustrates a function of the lumber support called 'Middle function' by inflating both lumber bladders 221 and 221'.

Section (d) of FIG. 3 illustrates a deflating function of the lumber support by deflating both lumber bladders 221, 221'.

Thus, the lumber support assembly 10 is capable of four-way (up, down, forward and backward) support by individually controlling the lumber bladders 221, 221'.

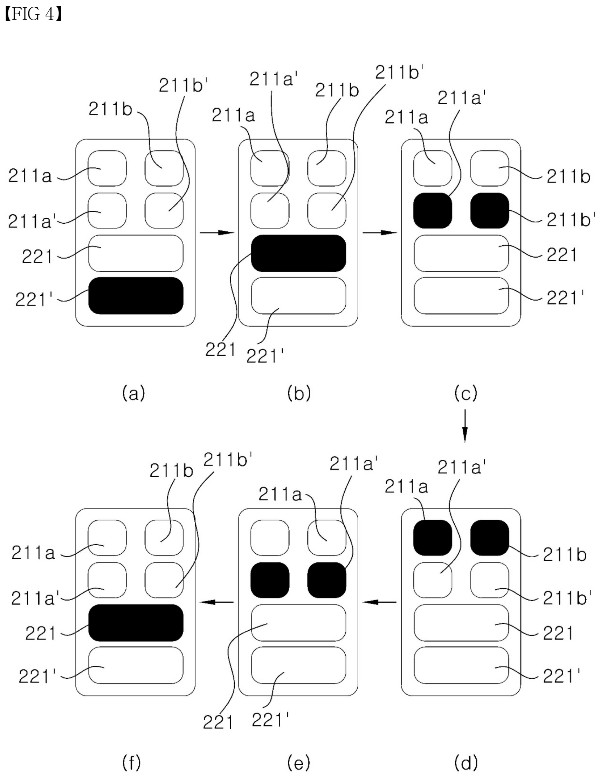

FIG. 4 illustrates a full-body massage function of the lumber support assembly 10. Specifically, the controller 400 may sequentially control the first back bladder 211a, 211a', the second back bladder 211b, 211b', and the lumber bladder 221, 221' to implement the full-body massage function.

As illustrated in sections (a) to (f) of FIG. 4, the lumber support assembly 10 may implement the full-body massage function by inflating and deflating the lumbar bladder 221' at the bottom and the first back bladder 211a and the second back bladder 211b at the top in sequence, and then inflating and deflating the first back bladder 211a and the second back bladder 211b and the lumbar bladder 221' in sequence, thereby implementing the full-body massage function. Furthermore, the full-body massage function is repeated as a process proceeds from section (f) to section (a) of FIG. 4.

In addition, the lumbar support assembly 10 may further include air bladders (not shown) on the bottom plate side of the vehicle seat and implement a full-body massage function in conjunction with the first back bladder 211a, 211a', second back bladder 211b, 211b', and lumbar bladder 221, 221'.

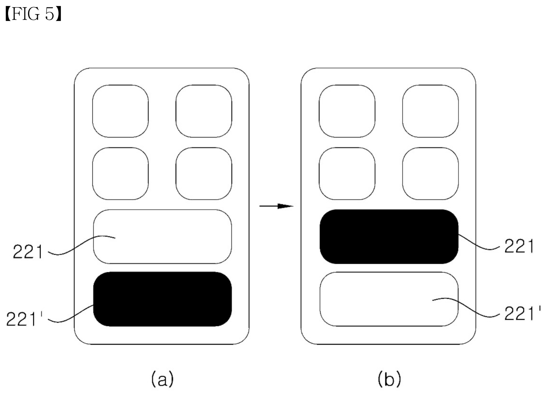

FIG. 5 illustrates a waist massage function of the lumbar support assembly 10. Specifically, the controller 400 may independently control the lumbar bladders 221, 221' to implement the waist massage function.

As illustrated in sections (a) and (b) of FIG. 5, the lumbar support assembly 10 may implement the waist massage function by selectively inflating and deflating the lumbar bladders 221, 221'.

Additionally, the lumbar support assembly 10 may further include air bladders in the bottom plate area of the vehicle seat to implement a waist and pelvic massage function in conjunction with the lumbar bladders 221, 221'.

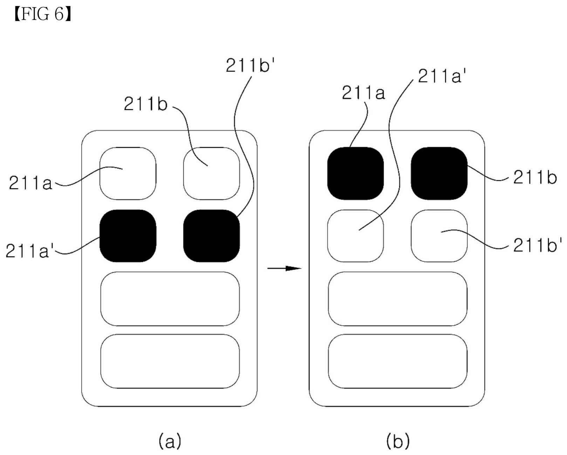

FIG. 6 illustrates an upper-body massage function of the lumbar support assembly 10. Specifically, the controller 400 may individually control the first back bladder 211a, 211a' and the second back bladder 211b, 211b' to implement the upper-body massage function.

As illustrated in sections (a) and (b) of FIG. 6, the lumber support assembly 10 may implement the upper-body massage function by selectively inflating and deflating the first back bladders 211a, 211a' and the second back bladders 211b, 211b'. In this case, the controller 400 may control the first back bladders 211a and the second back bladders 211b simultaneously, but may control the first and second bladders independently to alternately massage both lateral sides of the upper body of the occupant.

The expressions used in describing embodiments of the present disclosure, including terminology, visualized images, and the like, have been chosen for instrumental purposes only to enhance understanding of the technology.

Furthermore, although the limited number of embodiments has been described herein, one of ordinary skill in the art will be able to invent novel embodiments based on the described embodiments without departing from the technical ideas of the present disclosure.

Accordingly, the claims of this disclosure should not be limited by expressions in the "Description of the Disclosure" and "Drawings" but should be interpreted broadly based on the underlying technical ideas inherent in the specification as a whole.

## Claims

1. A lumbar support assembly comprising:
a suspension provided inside a vehicle seat;
a bladder module having an upper bladder portion and a lower bladder portion provided on a front side of the suspension;
a pump providing air to the bladder module; and
a controller configured to control the bladder module.

2. The lumbar support assembly of claim 1, wherein the upper bladder portion comprises a plurality of back bladders arranged on a vehicle seat in the height direction, and
the lower bladder portion is positioned lower than the upper bladder portion and comprises a plurality of lumbar bladders arranged on the vehicle seat in the height direction.

3. The lumbar support assembly of claim 2, wherein each of the back bladders comprises a first back bladder positioned on one side of the vehicle seat in the width direction, and a second back bladder positioned on the other side of the vehicle seat in the width direction, and
each of the lumbar bladders has a body portion on the widthwise medial side of the vehicle seat and both ends on both widthwise lateral sides of the vehicle seat.

4. The lumbar support assembly of claim 2, wherein the back bladders and the lumbar bladders are provided on the same plane.

5. The lumbar support assembly of claim 1, wherein the pump comprises:
a first tube supplying air to each of the back bladders;
and
a second tube supplying air to each of the lumber bladders.
